# EUROPEAN PATENT SPECIFICATION

(11) **EP 1 466 394 B1**
(45) Date of publication and mention of the grant of the patent: **08.03.2017**
(21) Application number: 03729269.5
(22) Date of filing: 10.01.2003
(51) Int. Cl.: H02B 1/20

(54) **STRUCTURE OF ELECTRICAL DISTRIBUTION CENTER**
STRUKTUR EINER ELEKTRISCHEN VERTEILERZENTRALE
STRUCTURE D'UN CENTRE DE DISTRIBUTION ELECTRIQUE

(30) Priority: 11.01.2002 FI 20020049
(43) Date of publication of application: 13.10.2004
(73) Proprietor: Finelcomp Oy, 83501 Outokumpu (FI)
(72) Inventor: JORMANAINEN, Martti, FIN-83100 Liperi (FI)
(74) Representative: Pitkänen, Hannu Alpo Antero
(86) International application number: PCT/FI2003/000017
(87) International publication number: WO 2003/058783

(56) References cited:
- DE-U1- 29 719 479
- FR-A1- 2 300 442
- US-A- 3 725 746
- US-A- 6 005 188
- DATABASE WPI Week 200230, Derwent Publications Ltd., London, GB; Class X13, AN 1998-094291, XP002966511 & JP 9 322 324 A (MITSUBISHI ELECTRIC CORP.) 12 December 1997

## Description

The present invention relates to a structure of electrical distribution center, which includes a modular base construction, frame plates to be adjusted to it for mounting of busbar system as well as profiles to be adjusted to the base construction to which plate and/or door coverings, which cover the base construction, are adjustable. Distribution centres of electricity are utilized for distributing electricity for various purposes. There are conductor rails and various electrical components in distribution centres of electricity, which are adjusted to the frame construction of a centre. Covering plates protect the power centre from surrounding dust and moisture. Furthermore, they prevent men and animals from touching the equipment, such that they on one hand protect the equipment and on the other hand they project men and animals.

There are various kinds of distribution centres of electricity with various kinds of construction solutions. For example, known are constructions with space for busbar system and construction with space for armature and a combination of those.

In previous cell type centre case/frame constructions busbar space is placed usually in the rear part (or front part) of the centre construction in the top, bottom or medium level, see for instance DE29719479 U.

The busbar space may, in those cases, not be used for other purposes, such as for mounting armature or as space for vertical rails. There will usually remain empty space not in use inside the frame construction, and the outer parameters of the centre will grow causing costs in building of the distributing centre and lack of space in the place of use of the distribution centre. On the other hand, use of one rail space causes lack of space for mounting armature and for cable work in centres, in which the whole of rail space is needed for building of busbar system.

One of the disadvantages in present construction is also the fact that when building electric distribution centres in which armature is mounted from both sides they must have been build artificially connecting centre construction parts of construction with space for busbar system and construction with space for armature together with another distribution centre with construction with space for armature, such that there will remain a busbar space needed between those armature spaces. The construction will, in that case, be massive and unintegrated.

Furthermore, in earlier solutions the phases of 1- and 3- phase rails of busbar system and PE- and 0-rails or at least one of them are been built to the same space with phase rails. While PE- and 0-rails are placed in busbar space connections needed from armature components to PE- and 0-rails must have been lead from the armature space to busbar space through the wall.

The object of the invention is to provide a structure of electrical distribution center, with which disadvantages related to present constructions are eliminated. Especially, the object of the invention is to provide a structure of electrical distribution center, in which inner parts of a distribution centre may be utilized effectively and armature may be placed where desired. Furthermore, the object of the invention is to provide a structure of electrical distribution center, which is economical by manufacturing costs and easy to assemble and to modify in various applications.

The object of the invention is accomplished by a structure of electrical distribution center, the characteristics of which are presented in the claims.

The structure of electrical distribution center in accordance with the invention includes a middle frame plate and additional frame modules to be placed to one side or to both sides of it, and to which frame plates and/or additional frame modules busbar system may be mounted. The additional frame modules may be placed to the bottom, to the top, to the middle part in vertical direction of the centre or to the whole area in vertical direction of the centre. Needed number of additional frame modules may be used in the centre and their number is by no means limited.

The mainframe construction, in other words the middle frame plates, placed in the middle of the distribution centre viewed from the end to which busbar system may be mounted, enables an advantageous way to build, for example, a distribution centre with armature on both sides. In that case power may be taken from busbar system to armature on both sides of the bar. Especially, in applications, in which a distribution centre and casing for equipment and logics for process control as well as cables connecting them are needed, all may be build integrated inside one cell case or cell case row by using the frame and casing solution in question.

While additional frame modules are placed on both sides of middle frame module there are three similar possibilities for bar space in the centre frame construction viewed from the centre end. Each space may be wholly or partially for busbar system use. The busbar system may be build either to the rear, front or to the middle part of the centre in depth. In each space the busbar may be build to the top, bottom or middle part in vertical direction of the distribution centre due to the symmetric construction of vertical/central line as well as modular construction of the distribution centre. All three longitudinal spaces may be used for either building of longitudinal busbar system, vertical rails or as armature space.

Inner parts of the distribution centre may be utilized effectively, because various rails needed may be placed inside the centre in places where they are required by the installing of armature, cabling or need for protection in longitudinal, crosswise or vertical direction. On the other hand armature may be placed wherever there is space left from building of power rails and vice versa. Due to all spaces in the construction and therefore to the modularity of the construction parts all properties of the construction are in use in all areas in longitudinal and vertical direction as well as in depth of the distribution centre to be built. The centre frame may be equipped with doors or fixed rear/front walls or with whatever longitudinal part of the centre depending on the place of the rails and armature inside the centre.

In distribution centres requiring great busbar currents busbar system may be build to the other or to both longitudinal outermost rail spaces of the centre by means of additional frame modules, for example, to the rear space, in which case the middle frame space and the other possibly free outer space are left as uniform armature space enabling the use of electric armature with larger outer parameters build in depth for greater current parameters. Conductor rail requiring great current built in the additional frame module may be built only to that part of the longitudinal direction of the centre which is needed and after that change to a lighter rail by current transfer ability to be built in the centre part of the frame construction, in which case the centre may be in this respect equipped with armature on both sides of the conductor rail in the middle frame.

As there are at least three different rail spaces as high as the centre in use while needed in longitudinal direction of the centre construction which all may be divided into smaller sections depending on how many additional frame modules or lead-through openings for rails of centre frame are needed in use, longitudinal, traditional, especially thick cables for current supply between electric armature may be compensated with conductor rail built in the middle or to a free additional frame. In that case cooling of power ways is more secure as the conductor will not be inside an insulate cover but in straight connection with air indoors the centre. Furthermore, an open railbar is more advantageous than a cable while building power ways on greater current areas.

Additional frame modules are advantageously mounted between the middle frame plate and the profile in accordance with the invention. This kind of construction is simple and easy to build.

In an advantageous additional application of the invention the base construction is symmetric with the longitudinal axis of the centre frame. Furthermore, in advantageous additional application the middle frame plates are mounted on the centre line of the base construction. The frame construction with its base and all longitudinal and vertical construction parts as well as cable canals are a modular, symmetric centre construction with many frames, which gives flexible possibilities for building of various distribution centres. Furthermore, one advantage is the fact that there will be less burning insulation material inside the centre.

In the next advantageous additional application of the invention inside the base construction there is a longitudinal cable canal and a cable groove for longitudinal cabling. The cable canal is meant for laying cables from any point of the centre to any point in longitudinal direction and from any to any of the three rail or armature space in depth. Cooling of indoor air may be organized for the whole centre construction by opening lead-through openings in the end of the cable canal in the base as well as the lead-through openings going through the ceiling of the cable canal space, which serves at the same time as the floor of the actual centre space. Patch plates with air openings may be placed to the lead-through openings.

In an additional application of the invention in modular frame construction built as a cell row a middle frame plate is mounted to the ends of the centre and in longitudinal connection points, in other words, between the frame modules a pair of frame plates adjusted face to face each other is mounted. While the middle frame plate pair is adjusted face to face each other there will be lead-through/support insulation mounting openings for the bar system in the frame plate pair and when the other frame plate is turned upside down the frame plate pair forms a closed moisture proof frame plate, in which case the space between the frame plate pairs may be used as a building space for armature and vertical rails and it is separated from the armature space next to it from both sides.

Next, the invention will be explained in more detail with reference to the accompanying drawings, in which,
Figure 1 illustrates an embodiment of a structure of electrical distribution center in accordance with the invention viewed diagonally from side,
Figure 2 illustrates an embodiment of a structure of electrical distribution center in accordance with fig. 1 viewed diagonally from side,

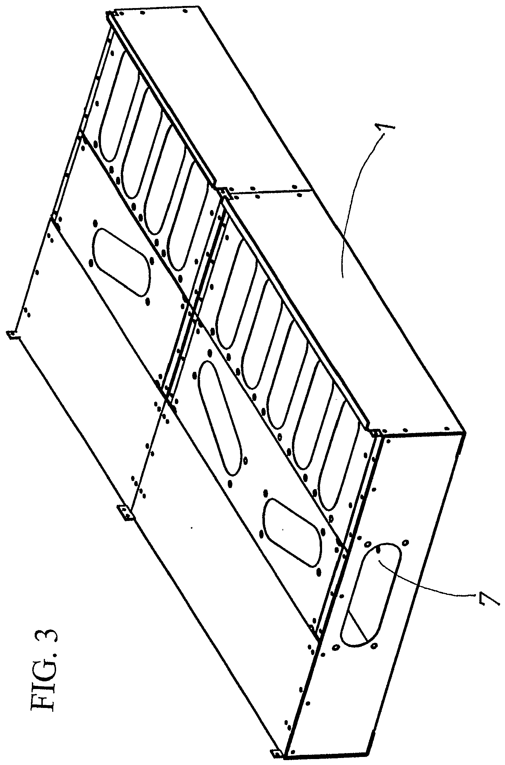

Figure 3 illustrates an embodiment of a base construction of a structure of electrical distribution center viewed diagonally from above, and

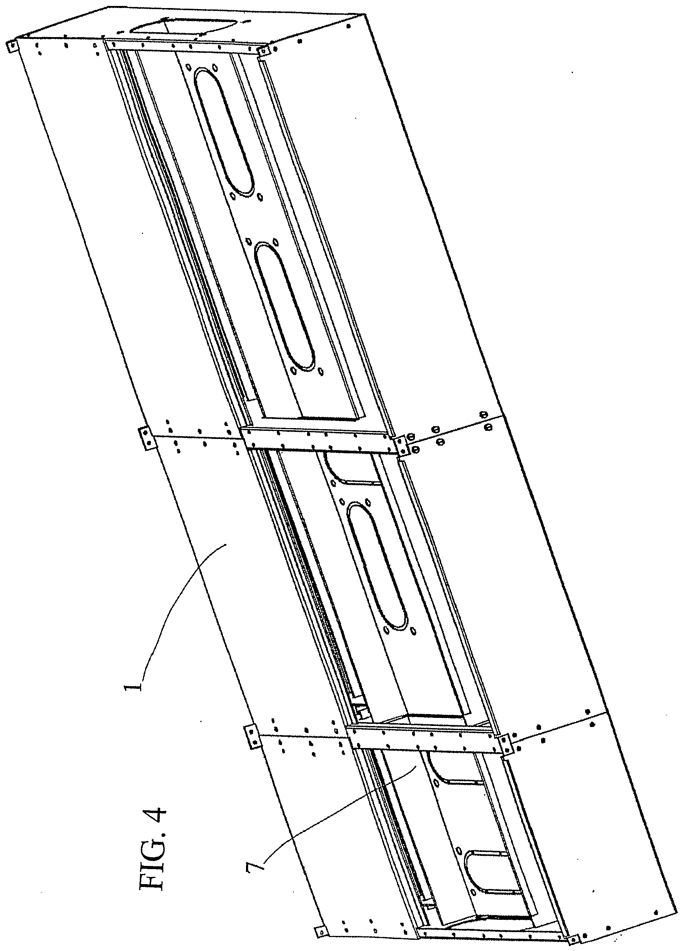

Figure 4 illustrates another embodiment of a base construction of a structure of electrical distribution center viewed diagonally from below.

In the application in accordance with the figures the structure of electrical distribution center includes symmetric in regard with the longitudinal axis of the centre frame and modular base construction 1, middle frame plates 2, 8, additional frame modules 3 and angle 4, front 5, and rear profiles 6.

The middle frame plates 2 and 8 have been fixed to the centre line of the base construction 1. In the modular frame construction built as a cell row one middle frame plate 2 is mounted to ends of the centre and a frame plate pair 8 is mounted to the longitudinal connection points in other words between the modules of the base construction. The angle 4, front 5 and rear 6 profiles are long profile bars or corresponding to be adjusted to the base construction. The angle profiles 4 are in the angles of the base construction, front profiles 5 are in the front part of the frame construction and the rear profiles 6 have been adjusted to the rear part of the frame construction. Protecting plate and door covering (not illustrated in figures) which covers the construction is adjusted to the profiles in earlier known way.

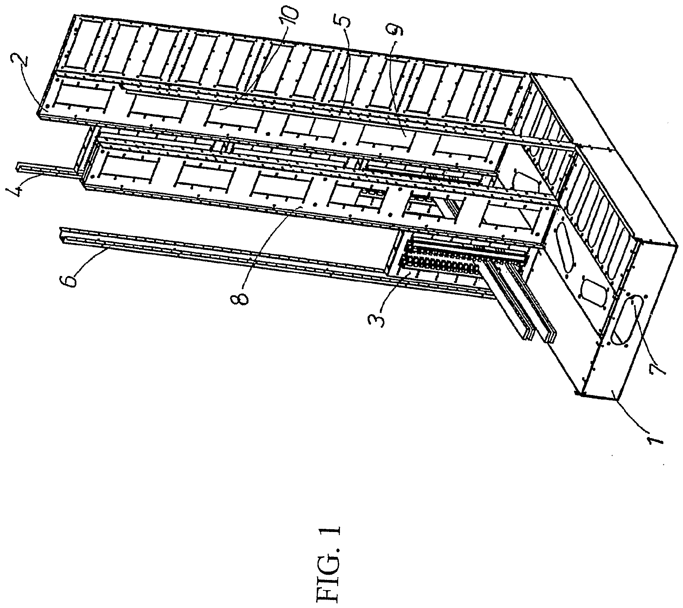

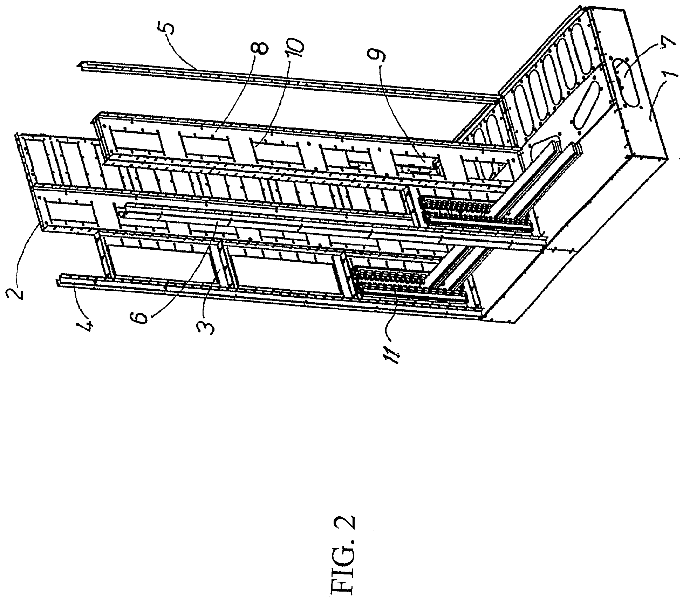

The additional frame modules 3 are adjusted to one or to both sides of the middle frame plate 2. In the embodiment in accordance with the figures 1 and 2 one additional frame module 3 has been adjusted to one side of the middle frame plate 2 between it and the rear profile 6. In figures the adjustment of conductor rails to this additional frame module has been illustrated.

The frame plate is adjusted such that the support insulation openings 9 in the frame plate are in chosen and needed place on the vertical axis of the centre construction. By opening prepared openings 10 of the frame plates that form a frame plate pair 8 it is possible by adjusting them face to face such that the opening are face to face and the prepared opening opened to get a frame construction pair 8 with openings half way the vertical axis or on the whole vertical axis or only partly on the vertical axis. Without opening the prepared openings 10 and by turning the other frame plate upside down 180° in regard with the other frame plate 2, a space, protected from moisture laterally, is created from a pair of frame plates between the frame plates, and the pair of plates will be closed laterally.

Inside the base part 1 there is a cable canal on longitudinal axis and a cable groove 7 for longitudinal cabling. In the end of the base, in the end of the cable canal, there are lead-through openings and in the ceiling there are lead-through openings. To these openings patch plates with air openings may be mounted. The ceiling of the cable canal space serves as the floor of the actual centre space.

In one alternative constructions of the centre construction the busbar system may be built to earlier mentioned centre frame construction. In another alternative construction the earlier explained frame formed of a pair of frame plates may wholly or partially be left longitudinal for building of additional rails or vertical rails and to build a busbar system by means of additional frame modules 3. Additional frame modules 3 may be placed one on top of another as many as needed and on one or on both sides of the middle frame plates 2, as needed. It is also possible to place two or more additional frame modules side by side.

The invention is not limited to the presented advantageous application but it can vary within the frames of the idea of the invention formed in the claims.

## Claims

1. A structure of electrical distribution center, which includes a modular base construction (1), frame plates (2, 8) to be adjusted to it for mounting a busbar system and profiles (4, 5, 6) to be adjusted to the base construction, to which profiles plates and/or a door covering that covers the frame construction are able to be adjusted, **characterized in that** the structure includes middle frame plates (2, 8) between the front (5) and rear profiles (4, 6) and additional frame modules (3) on one or on both sides of the middle frame plates (2, 8) to which middle frame plates (2, 8) and/or additional frame modules (3) the busbar system (11) is able to be adjusted to.

2. A structure of electrical distribution center in accordance with claim 1, **characterized in that** the additional frame modules (3) have been adjusted between the middle frame plate (2) and the profile (5, 6).

3. A structure of electrical distribution center in accordance with claim 1 or 2, **characterized in that** the base construction (1) is symmetric with regard to longitudinal axis of the centre frame.

4. A structure of electrical distribution center in accordance with any of claims 1-3,
**characterized in that** inside the base part (1) there is a cable canal and a cable groove (7) in longitudinal axis for longitudinal cabling.

5. A structure of electrical distribution center in accordance with any of claims 1-4, **characterized in that** the middle frame plates (2, 8) have bee adjusted on the central line of the base construction (1).

6. A structure of electrical distribution center in accordance with any of claims 1-5,
**characterized in that** in the modular frame construction built to a cell row one middle frame plate (2) is adjusted to the ends of the centre and to longitudinal connection points in other words between the frame modules a pair of frame plates (8) adjusted face to face with each other will be adjusted.

## Patentansprüche

1. Struktur einer zentralen elektrischen Verteilung (1), umfassend eine modulare Grundkonstruktion (1), daran anzuordnende Rahmenbleche (2, 8) zur Montage eines Sammelschienensystems und an der Grundkonstruktion anzuordnende Profile (4, 5, 6), an welchen Profilen Bleche und/oder eine die Rahmenkonstruktion verdeckende Türverkleidung angeordnet werden können, ***dadurch gekennzeichnet*, dass** die Struktur mittlere Rahmenbleche (2, 8) zwischen dem vorderen (5) und den hinteren Profilen (4, 6) und zusätzliche Rahmenmodule (3) an einer oder beiden Seiten der mittleren Rahmenbleche (2, 8) umfasst, an welchen mittleren Rahmenblechen (2, 8) und/oder zusätzlichen Rahmenmodulen (3) das Sammelschienensystem angeordnet werden kann.

2. Struktur einer zentralen elektrischen Verteilung nach Anspruch 1, ***dadurch gekennzeichnet*, dass** die zusätzlichen Rahmenmodule (3) zwischen den mittleren Rahmenblechen (2) und dem Profil (5, 6) angeordnet worden sind.

3. Struktur einer zentralen elektrischen Verteilung nach Anspruch 1 oder 2, ***dadurch gekennzeichnet,* dass** die Grundkonstruktion (1) symmetrisch zur Längsachse des Zentralrahmens ist.

4. Struktur einer zentralen elektrischen Verteilung nach einem der Ansprüche 1 bis 3, ***dadurch gekennzeichnet,* dass** es im Basisteil (1) einen Kabelkanal und eine Kabelrinne (7) in der Längsachse zur Längsverkabelung gibt.

5. Struktur einer zentralen elektrischen Verteilung nach einem der Ansprüche 1 bis 4, ***dadurch gekennzeichnet,* dass** die mittleren Rahmenbleche (2, 8) auf der Mittellinie der Grundkonstruktion (1) angeordnet worden sind.

6. Struktur einer zentralen elektrischen Verteilung nach einem der Ansprüche 1 bis 5, ***dadurch gekennzeichnet,* dass** in der modularen Rahmenkonstruktion, die zu einer Zellenreihe gebaut ist, ein mittleres Rahmenblech (2) an den Enden der zentralen Verteilung und an Längsverbindungspunkten angeordnet ist, in anderen Worten, dass zwischen den Rahmenmodulen zwei gegenüberliegend zueinander angeordnete Rahmenbleche (8) angeordnet sein werden.

## Revendications

1. Structure d'un centre de distribution électrique (1), comprenant une construction de base modulaire (1), des tôles de cadre (2, 8) à y être fixées pour le montage d'un système de barre omnibus, et des profilés (4, 5, 6) à être fixés sur la construction de base, des tôles et/ou un revêtement de porte recouvrant la construction-cadre pouvant être fixés sur lesdits profilés, ***caractérisée en ce que*** ladite structure comprend des tôles de cadre centrales (2, 8) entre les profilés avant (5) et arrière (4, 6) et des modules de cadre supplémentaires (3) sur un côté ou des deux côtés des tôles de cadre centrales (2, 8), le système de barre omnibus pouvant être fixé sur lesdites tôles de cadre centrales (2, 8) et/ou lesdits modules de cadre supplémentaires (3).

2. Structure d'un centre de distribution électrique selon la revendication 1,
***caractérisée en ce que*** les modules de cadre supplémentaires (3) ont été fixés entre les tôles de cadre centrales (2) et les profilés (5, 6).

3. Structure d'un centre de distribution électrique selon la revendication 1 ou 2,
***caractérisée en ce que*** la construction de base (1) est symétrique par rapport à l'axe longitudinal du cadre du centre.

4. Structure d'un centre de distribution électrique selon l'une des revendications 1
à 3, ***caractérisée en ce qu'***il y a, dans l'embase (1), un caniveau et une rainure (7) dans l'axe longitudinal pour le câblage longitudinal.

5. Structure d'un centre de distribution électrique selon l'une des revendications 1
à 4, ***caractérisée en ce que*** les tôles de cadre centrales (2, 8) ont été fixées sur l'axe central de la construction de base (1).

6. Structure d'un centre de distribution électrique selon l'une des revendications 1
à 5, ***caractérisée en ce que***, dans le cadre modulaire construit en rangée cellulaire, une tôle de cadre centrale (2) est fixée aux extrémités du centre et à des points de raccordement longitudinal, en d'autres mots, une paire de tôles de cadre (8) placées l'une en face de l'autre seront fixées entre les modules de cadre.
